(19) Europäisches Patentamt
European Patent Office
Office européen des brevets

(11) **EP 2 366 758 A2**

(12) **EUROPÄISCHE PATENTANMELDUNG**

(43) Veröffentlichungstag:
21.09.2011 Patentblatt 2011/38

(51) Int Cl.:
*C10B 53/07* (2006.01)   *C10G 1/10* (2006.01)

(21) Anmeldenummer: **11002168.0**

(22) Anmeldetag: **16.03.2011**

(84) Benannte Vertragsstaaten:
**AL AT BE BG CH CY CZ DE DK EE ES FI FR GB GR HR HU IE IS IT LI LT LU LV MC MK MT NL NO PL PT RO RS SE SI SK SM TR**
Benannte Erstreckungsstaaten:
**BA ME**

(30) Priorität: **16.03.2010   DE 102010011621**

(71) Anmelder: **EME-Tech GmbH**
**28329 Bremen (DE)**

(72) Erfinder:
• **Sayenko, Valeri**
  **Moskau (RU)**

• **Manyungin, Igor**
  **Region Vidnoe**
  **Vidnoe (RU)**
• **Egorov, Nikolay**
  **Moskau (RU)**
• **Startchenko, Viktori**
  **Moskau (RU)**
• **Egorov, Alexander**
  **Moskau (RU)**

(74) Vertreter: **Heiland, Karsten et al**
**Meissner, Bolte & Partner GbR**
**Hollerallee 73**
**28209 Bremen (DE)**

(54) **Vorrichtung zur Verarbeitung organischer Abfälle**

(57) Die Erfindung betrifft eine Vorrichtung für die Verarbeitung organischer Abfälle, mit einem auf einem Gestell, insbesondere Fahrgestell montierten Dampfkessel mit Ofen und einem vor dem Ofen eingestellten bzw. angeordneten Förderer. Erfindungsgemäß sind eine Schleusenkammer, ein Thermolyse-Ofen und eine Kühlkammer vorgesehen, wobei Mittel zur insbesondere hermetischen Abdichtung der Schleusenkammer, des ThermolyseOfens und/oder der Kühlkammer vorhanden sind.

Fig. 1

EP 2 366 758 A2

**Beschreibung**

Die Erfindung betrifft die Technologie der Verarbeitung organischer Industrie- und Haushaltabfälle und kann in der Wohnungs- und Kommunalwirtschaft zur Wiederverwendung von Abfällen, im Brennstoff- und energiewirtschaftlichen Komplex, in der Industrie der erdölchemischen organischen Synthese sowie in der gummitechnischen Industrie angewendet werden.

Es ist eine Vorrichtung zur Pyrolyse von Reifen bekannt, welche eine Beschickungskammer in Form einer Wanne mit Öl, eine zylindrische Retorte mit einer feuerfesten Auskleidung und einem Gitter zur Einleitung von Heizgasen, Gasbrenner, die mit dem Mantel der Retorte verbunden sind, und einen Kratzerförderer zum Austrag des kohlenstoffhaltigen Rückstandes aufweist (1).

Nachteile der Vorrichtung sind der hohe Ölverbrauch bei der Einbringung der Reifen in die Retorte, der hohe Energieaufwand, die Kompliziertheit des Prozesses der Abtrennung der gasförmigen Produkte der Pyrolyse der Reifen von den Verbrennungsprodukten des Gases und dem festen Rückstand sowie die Bildung toxischer Verbindungen dadurch, dass Öl aus der Beschickungskammer in die Retorte gelangt.

Es ist eine Vorrichtung bekannt (2), in welcher ein Verfahren zur Verarbeitung von Gummiabfällen durchgeführt wird und welche einen Reaktor mit einer Schleusenkammer und einem Gitter, einen Dampferzeuger mit einem Dampfüberhitzer, der an den Reaktor angeschlossen ist, einen Kondensator, der mit dem Reaktor verbunden ist, einen Brecher, der mit dem Ausgang der festen Produkte aus dem Reaktor verbunden ist, einen Kühler für die festen Produkte, der an den Brecher angeschlossen ist, einen Separator zur Abtrennung von Metall von dem kohlenstoffhaltigen Rückstand und eine Presse zur Brikettierung des kohlenstoffhaltigen Rückstandes aufweist.

Nachteile dieser Vorrichtung sind der hohe Verbrauch an Wasserdampf und der damit verbundene hohe Energieaufwand sowie der hohe Materialeinsatz, der mit dem Vorhandensein einer speziellen Ausrüstung zur Überhitzung von Wasserdampf auf eine Temperatur von 1600 °C verbunden ist.

Es ist eine Vorrichtung (3) zur Verarbeitung von Gummiabfällen bekannt, die einen Brennraum mit einem Gewölbe und einem Rauchabzugsrohr, eine über dem Brennraum angeordnete Retorte, die konstruktiv mit einer Kühlkammer verbunden ist, und einen Kondensator aufweist. Zwischen dem Gewölbe des Brennraums, der Retorte und der Kühlkammer ist eine lockere Schüttung aus feuerfestem Material mit einem Teilchendurchmesser von 5 - 250 mm angeordnet, die einen Gaskanal aus dem Brennraum in das Rauchabzugsrohr bildet. In die Schüttung ist ein Verdampfer eingebaut, welcher mittels einer Dampfleitung mit der Retorte verbunden ist; ein Separator zur Abtrennung von Wasser von den Zersetzungsprodukten der Abfälle ist durch eine Wasserleitung mit der Kühlkammer und dem Verdampfer verbunden; es ist ein Wärmetauscher vorhanden, der über seinen Eingang mit der Retorte verbunden ist, während sein Ausgang an den Eingang des Kondensators angeschlossen ist.

Zu den Nachteilen dieser Vorrichtung gehören die sich bildenden großen Mengen von mit Zersetzungsprodukten des Gummis verunreinigtem Kondensat, für dessen Reinigung spezielle Vorrichtungen benötigt werden: ein Separator und ein spezielles Filter; sowie ein hoher Verbrauch von Kühlwasser.

Am nächsten kommt der zum Patent angemeldeten Erfindung die von uns als Prototyp verwendete Vorrichtung zur Verarbeitung von Gummiabfällen (4).

Die Vorrichtung weist ein auf einem Gestell montiertes Entnahmeorgan und einen hinter ihm angebrachten perforierten Förderer, einen Bunker und einen Dampfkessel mit einem Wirbelschichtofen auf. Das Obertrum des Förderers ist durch den Bunker hindurchgeführt, dessen oberer Teil mit dem Dampferzeuger des Dampfkessels in Verbindung steht, und das Untertrum, zum Sammeln von Erdölprodukten, steht mit dem Wirbelschichtofen in Verbindung.

Ein wesentlicher Nachteil dieser Vorrichtung ist der Austritt eines Gas-Dampf-Gemisches in die Umwelt, was zu einer Verunreinigung der Umwelt mit gasförmigen Zersetzungsprodukten organischer Abfälle führt.

Ein Nachteil der Vorrichtung ist auch die Beschränkung hinsichtlich der geometrischen Abmessungen der zu verarbeitenden Abfälle, d.h. die Vorrichtung gewährleistet nur die Verarbeitung von dispergierten (zerkleinerten) Abfällen. Die Dispergierung der Abfälle (insbesondere von Gummiabfällen) wiederum erfordert einen hohen Energieaufwand, was unter Berücksichtigung des Verlustes von Betriebsdampf aufgrund seines Entweichens in die Umwelt auch zu einem hohen Energieaufwand für den Prozess der Verarbeitung der Abfälle führt.

Aufgabe der beabsichtigten technischen Lösung ist die Schaffung einer Vorrichtung, welche die Effizienz des Prozesses der Verarbeitung von Gummiabfällen erhöht.

Ziel der Erfindung sind die Senkung der Energieintensität der Vorrichtung und die Verringerung der Menge der Schadstoffemissionen in die Umwelt.

Das gestellte Ziel wird dadurch erreicht, dass eine Vorrichtung zur Verarbeitung organischer Abfälle einen auf einem Gestell montierten Dampfkessel mit einem Ofen und einen vor den Ofen angebrachten Förderer aufweist. Gemäß der Erfindung sind Mittel zur hermetischen Abdichtung der Schleusenkammer, eines Thermolyseofens und einer Kühlkammer vorhanden; hierbei verläuft der Förderer durch die Schleusenkammer hindurch, und der Thermolyseofen ist mit einem Kondensator der gasförmigen Phase, einem Separator zur Trennung des Kondensats in Wasser und eine flüssige Fraktion und einem Mittel zur Rektifikation der flüssigen Fraktion ausgestattet, der Kondensator weist ein Mittel zur kontinuierlichen Abführung von Wärmeenergie in die Umwelt auf, und der Eingang des Kondensators ist mittels einer Rohrleitung an den oberen Bereich des Thermolyseofens angeschlossen, während der Ausgang durch eine Rohrleitung mit dem Separator verbunden ist; die Kühlkammer enthält einen Wasserzerstäuber und einen Behälter, welcher mittels Rohrleitungen an den Wasserauslass aus dem Separator und an die Wassereinlässe in den Zerstäuber und in den Dampfkessel angeschlossen ist.

Das Mittel zur Rektifikation ist in Form einer Rektifikationskolonne ausgeführt, die mit einem Ausgang der flüssigen Phase mit einem Siedebereich bis 250 °C und einem Ausgang der flüssigen Phase mit einem Siedebereich über 250 °C, welcher mittels Rohrleitungen mit dem Ofen, dem Dampfkessel und dem Thermolyseofen verbunden ist, ausgestattet ist.

Die Vorrichtung enthält zusätzlich ein Dieselkraftwerk, welches an den Ausgang der flüssigen Phase mit einem Siedebereich bis 250 °C angeschlossen ist.

Das Mittel zur kontinuierlichen Abführung von Wärmeenergie in die Umwelt ist in Form eines Radiators mit einem Ventilator ausgeführt, und das Mittel zur hermetischen Abdichtung ist in Form einer Tür und von Schieberverschlüssen ausgeführt.

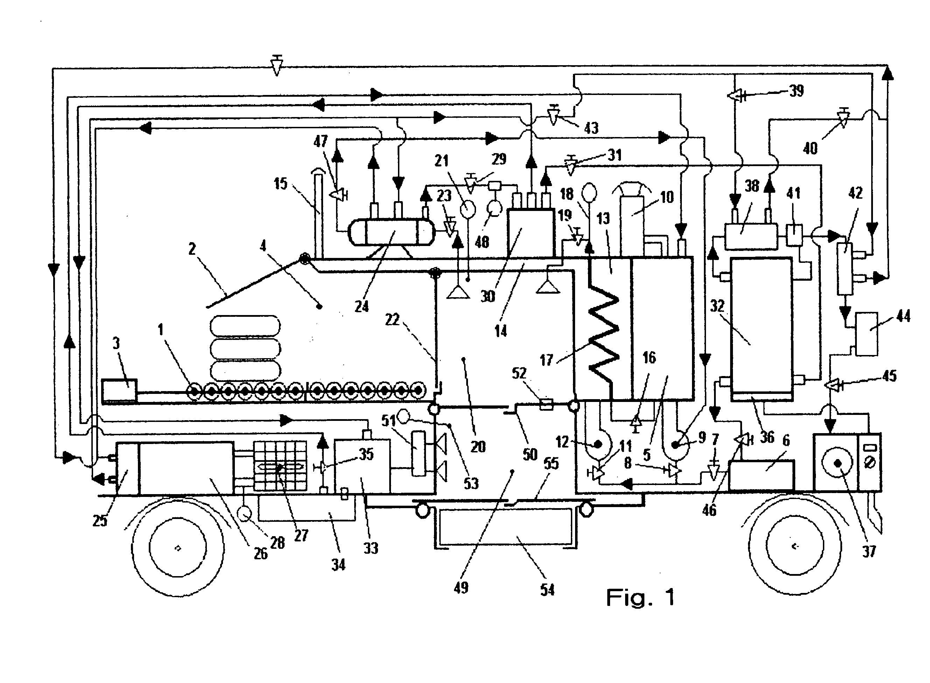

In Fig. 1 ist eine Gesamtansicht der Vorrichtung dargestellt.

Die Vorrichtung weist einen Rollgang 1, eine Tür 2, einen Motor 3, eine Beschickungskammer 4, einen Dampferzeuger 5, einen Behälter mit flüssigem Brennstoff 6, Hähne 7 und 8, einen Brenner 9, ein Rauchabzugsrohr 10, einen Hahn 11, einen Brenner 12, einen Ofen 13, einen Mantel 14, ein Rauchabzugsrohr 15, einen Hahn 16, einen Wärmetauscher 17, einen Temperatursensor 18, einen Hahn 19, einen Thermolyseofen 20, einen Temperatursensor 21, eine Tür 22, einen Hahn 23, einen Kondensator 24, eine Wasserpumpe 25, einen Behälter 26, einen Radiator mit einem Ventilator 27, einen Temperatursensor 28, einen Hahn 29, einen Separator 30, einen Hahn 31, eine Rektifikationskolonne 32, einen Sammelbehälter für Wasser 33, ein Filter 34, einen Hahn 35, eine elektrische Heizvorrichtung 36, ein Dieselkraftwerk 37, einen Dephlegmator 38, Hähne 39 und 40, einen Verteiler 41, einen Kondensator 42, einen Hahn 43, einen Aufnahmebehälter 44, Hähne 45, 46 und 47, einen Sensor für die Konzentration der flüssigen Zersetzungsprodukte der Abfälle im Wasser 48, eine Kühlkammer 49, Türen 50, ein Wasserzerstäubungssystem 51, ein Ventil 52, einen Temperatursensor für die festen Zersetzungsprodukte 53, einen Sammelbehälter für feste Produkte 54 und einen Schieberverschluss 55 auf.

Die Vorrichtung funktioniert wie folgt. Auf dem Rollgang 1 wird ein Stapel aus abgenutzten Reifen gebildet, indem die Reifen aufeinander abgelegt werden. Nach der Bildung des Stapels wird die Tür 2 geöffnet, der Motor 3 wird eingeschaltet, welcher den Rollgang 1 in Gang setzt, und der Reifenstapel wird der Beschickungskammer 4 zugeführt; anschließend wird die Tür 2 geschlossen. Nach der Zuführung des Reifenstapels in die Beschickungskammer wird der Dampferzeuger 5 in Betrieb gesetzt. Hierzu wird aus dem Behälter mit flüssigem Brennstoff 6 über die Hähne 7 und 8 dem Brenner 9 des Dampferzeugers flüssiger Brennstoff zugeführt und verbrannt. Die Verbrennungsprodukte des Brennstoffes werden in das Rauchabzugsrohr 10 abgeführt. Gleichzeitig wird aus dem Behälter 6 über die Hähne 7 und 11 dem Brenner 12 des Ofens 13 flüssiger Brennstoff zugeführt und verbrannt. Die Verbrennungsprodukte des Brennstoffes (Temperatur bis 700 °C) werden aus dem Ofen 13 über den Mantel 14 in das Rauchabzugsrohr 15 abgeführt. Aus dem Dampferzeuger 5 wird über den Hahn 16 dem Wärmetauscher 17 Wasserdampf zugeführt, welcher sich, während er den Wärmetauscher durchströmt, auf eine Temperatur von 600-700 °C erwärmt. Hierbei wird die Überhitzungstemperatur des Dampfes anhand der Anzeigewerte des Temperatursensors 18 kontrolliert. Der überhitzte Wasserdampf aus dem Wärmetauscher 17 wird über den Hahn 19 dem Thermolyseofen 20 zugeführt. Infolge der Zuführung des auf 600-700 °C überhitzten Dampfes und des Wärmeaustausches mit der Wand des Ofens 13 und der Wand des Mantels 14 erhöht sich im Thermolyseofen 20 die Temperatur des Gas-Dampf-Mediums auf 500 °C, was anhand der Anzeigewerte des Temperatursensors 21 kontrolliert wird. Nachdem im Thermolyseofen 20 eine Temperatur von 500 °C erreicht worden ist, wird die Tür 22 geöffnet, und mit Hilfe des Rollgangs 1 wird der Stapel abgenutzter Reifen aus der Beschickungskammer 4 in den Thermolyseofen 20 transportiert. Danach wird die Tür 22 geschlossen.

Im Thermolyseofen 20 findet infolge des Wärmeaustausches mit dem Gas-Dampf-Medium eine Erwärmung der abgenutzten Reifen auf eine Temperatur von 450 °C statt, und es läuft ein Prozess der thermischen Zersetzung des Gummis mit Bildung gasförmiger und fester Produkte ab. Die sich bildenden gasförmigen Produkte werden über den Hahn 23 in den Kondensator 24 abgeführt. Gleichzeitig mit der Abführung der gasförmigen Produkte wird durch den Mantel des Kondensators 24 mit Hilfe der Wasserpumpe 25 aus dem Behälter 26 Kühlwasser hindurchgepumpt. Infolge des Wärmeaustausches mit den gasförmigen Zersetzungsprodukten der abgenutzten Reifen erwärmt sich das Kühlwasser. Das erwärmte Wasser wird aus dem Mantel des Kondensators 24 in den Behälter 26 zurückgeführt. Anschließend wird das erwärmte Wasser aus dem Behälter 26 dem Radiator mit einem Ventilator 27 zugeführt, wo infolge des Wärmeaustausches mit dem Luftstrom, der von dem Ventilator erzeugt wird, das Wasser auf eine Temperatur von 15-20 °C abgekühlt und in den Behälter 26 zurückgeführt wird. Die Temperatur der Kühlung des Wassers wird anhand der Anzeigewerte des Temperatursensors 28 kontrolliert.

In dem Kondensator 24 werden die gasförmigen Zersetzungsprodukte der abgenutzten Reifen und der Wasserdampf abgekühlt, wodurch der Wasserdampf und ein Teil der gasförmigen Zersetzungsprodukte unter Bildung von Wasser und einer flüssigen Fraktion kondensieren. Das sich bildende Gemisch aus Wasser und der flüssigen Fraktion wird über den Hahn 29 aus dem Kondensator 24 in den Separator 30 abgeführt, wo die flüssige Fraktion vom Wasser getrennt wird. Danach wird die flüssige Fraktion aus dem Separator 30 über den Hahn 31 der Rektifikationskolonne 32 zugeführt, und das Wasser wird dem Sammelbehälter 33 zugeführt. Aus dem Sammelbehälter 33 wird über das Filter 34 und den Hahn 35 das gereinigte Wasser in den Dampferzeuger 5 zur Gewinnung von Betriebswasserdampf zurückgeführt.

In der Rektifikationskolonne 32 wird die flüssige Fraktion mit Hilfe der elektrischen Heizvorrichtung 36 erwärmt, die an das Dieselkraftwerk 37 angeschlossen ist. Die sich infolge der Erwärmung der flüssigen Fraktion bildenden Dämpfe gelangen aus der Kolonne 32 in den Dephlegmator 38, wo sie infolge des Wärmeaustausches mit dem Kühlwasser, das über den Hahn 39 dem Mantel des Dephlegmators zugeführt wird und über den Hahn 40 aus dem Mantel abgeführt wird, teilweise kondensieren. Ein Teil des Kondensats der Dämpfe (Phlegma) fließt über den Verteiler 41 zurück in die Kolonne 32, und der andere Teil (Destillat) gelangt in den Kondensator 42, der mit Wasser gekühlt wird, welches über den Hahn 43 zugeführt wird. Aus dem Kondensator 42 gelangt das Destillat mit einer Siedetemperatur bis 250 °C in den Aufnahmebehälter 44, aus welchem über den Hahn 45 ein Teil des Destillats als Brennstoff dem Motor des Dieselkraftwerks zugeführt wird. Der Rest der flüssigen Fraktion mit einer Siedetemperatur über 250 °C wird über den Hahn 46 in den Behälter 6 abgelassen.

Die nicht kondensierten gasförmigen Produkte der thermischen Zersetzung der abgenutzten Reifen werden aus dem Kondensator 24 über den Hahn 47 dem Brenner 9 des Dampferzeugers 5 zugeführt und verbrannt.

Nach Beendigung des Prozesses der thermischen Zersetzung der abgenutzten Reifen (der Zeitpunkt der Beendigung des Prozesses wird mit Hilfe des Sensors 48 bestimmt, der den Gehalt an flüssigen Zersetzungsprodukten in dem Wasser, das in den Separator 30 gelangt, kontrolliert) werden die festen Zersetzungsprodukte aus dem Thermolyseofen 20 in die Kühlkammer 49 abgeführt. Hierzu werden die Türen 50 geöffnet, und die festen Produkte fallen infolge ihres Eigengewichts aus dem Thermolyseofen in die Kühlkammer 49. Danach werden die Türen 50 geschlossen. Die Türen 22 werden geöffnet, und der nächste Stapel abgenutzter Reifen wird dem Thermolyseofen zugeführt.

Nach dem Austrag der festen Zersetzungsprodukte der Reifen in die Kühlkammer wird Wasser aus dem Behälter 33 über das Zerstäubungssystem 51 zerstäubt. Das Wasser kühlt die festen Produkte auf 100-120 °C ab. Die sich bildenden Wasserdämpfe erhöhen den Druck in der Kühlkammer und strömen über das Ventil 52 in den Thermolyseofen aus.

Die Temperatur der Kühlung der festen Produkte wird anhand der Anzeigewerte des Temperatursensors 53 kontrolliert.

Nach der Abkühlung werden die festen Produkte aus der Kühlkammer in den Sammelbehälter 54 ausgetragen. Hierzu wird der Schieberverschluss 55 geöffnet, und die festen Produkte fallen infolge ihres Eigengewichts in den Behälter 54. Der Schieberverschluss 55 wird nach dem Austrag der festen Produkte geschlossen.

Die Erfindung wird durch die folgenden Beispiele veranschaulicht.

Beispiel 1.

Auf dem Rollgang 1 werden Stapel aus abgenutzten Reifen mit einem Gewicht von 400 kg durch Ablegen der Reifen aufeinander gebildet. Falls ein Reifen ein Gewicht von 40 kg hat, müssen zwei Stapel aus je 5 Reifen gebildet werden. Die geometrischen Abmessungen eines Stapels sind dann folgende: Durchmesser - 1 m, Höhe - 1 m.

Nach der Bildung der Stapel wird die Tür 2 geöffnet, der Motor 3 wird eingeschaltet, welcher den Rollgang 1 in Gang setzt, und die beiden Reifenstapel werden in die Beschickungskammer 4 transportiert; anschließend wird die Tür 2 geschlossen. Nach dem Transport der Reifenstapel in die Beschickungskammer wird der Dampferzeuger 5 in Betrieb gesetzt. Hierzu wird aus dem Behälter mit flüssigem Brennstoff 6 über die Hähne 7 und 8 dem Brenner 9 des Dampferzeugers flüssiger Brennstoff mit einem Durchfluss von 18 kg/h zugeführt und verbrannt, zur Gewinnung von 200 kg/h Wasserdampf bei T = 140°C und einem Druck von 3,6 atm (0,36 MPa). Die Verbrennungsprodukte des Brennstoffes, in einer Menge von 220 kg/h (bei der Verbrennung von 1 kg Brennstoff bilden sich 12,2 kg Verbrennungsprodukte), werden in das Rauchabzugsrohr 10 abgeführt.

Gleichzeitig wird aus dem Behälter 6 über die Hähne 7 und 11 dem Brenner 12 des Ofens 13 flüssiger Brennstoff mit einem Durchfluss von 13,5 kg/h zugeführt und verbrannt, zur Überhitzung von 200 kg/h Wasserdampf von T = 140 °C auf T = 655 °C und Erwärmung des Arbeitsmediums im Thermolyseofen.

Die Verbrennungsprodukte des Brennstoffes (Temperatur bis 800 °C) in einer Menge von 165 kg/h werden aus dem Ofen 13 über den Mantel 14 in das Rauchabzugsrohr 15 abgeführt.

Beim Durchströmen des Mantels 14 werden im Thermolyseofen die Verbrennungsprodukte auf eine Temperatur von 500 °C abgekühlt, und während sie weiter durch den Mantel in der Beschickungskammer strömen, werden sie auf 250 °C abgekühlt und in die Umwelt ausgestoßen. Dabei hat die Wärmemenge, die von den Verbrennungsprodukten in den Thermolyseofen abgegeben wird, folgenden Wert:

$$Q_{Verbrennungsprod.1} = M_{Verbrennungsprod.} \cdot C_{Verbrennungsprod.} \cdot (T_2 - T_1) =$$
$$165 \text{ kg/h} \cdot 1{,}34 \text{ kJ/kg°C} (800 \text{ °C} - 500 \text{ °C}) =$$
$$66.330 \text{ kJ/h,}$$

wobei $M_{Verbrennungsprod.}$ - Menge der Verbrennungsprodukte, kg/h; $C_{Verbrennungsprod.}$ = spezifische Wärmekapazität der Verbrennungsprodukte, kJ/kg°C; $T_1$ und $T_2$ - Eintrittstemperatur der Verbrennungsprodukte in den Mantel 14 im Thermolyseofen und Austrittstemperatur derselben aus dem Mantel im Thermolyseofen.

In der Beschickungskammer wird Wärme von den Verbrennungsprodukten auf die Gummiabfälle übertragen. Diese Wärmemenge ist folgende:

$$Q_{Verbrennungsprod.2} = M_{Verbrennungsprod.} \cdot C_{Verbrennungsprod.} \cdot (T_4 - T_3) =$$
$$165 \text{ kg/h} \cdot 1{,}34 \text{ kJ/kg°C} (500 \text{ °C} - 250 \text{ °C}) =$$
$$55.275 \text{ kJ/h,}$$

wobei $T_3$ und $T_4$ - Eintrittstemperatur der Verbrennungsprodukte in den Mantel in der Beschickungskammer 4 und Austrittstemperatur derselben in die Umwelt.

Da der Ofen 13 eine gemeinsame Wand mit dem Thermolyseofen aufweist, wird Wärme von der Wand durch Konvektion und Wärmestrahlung (die Wand ist auf 800 °C erhitzt) auf die abgenutzten Reifen übertragen, und die Menge dieser Wärme beträgt 25 % der im Ofen 13 freigesetzten Wärme bei Verbrennung von 13,5 kg/h flüssigem Brennstoff, d.h. diese Wärmemenge ist gleich 0,25 . 13,5 kg/h . 44.440 kJ/kg = 150.000 kJ/h. Dabei wurden 44.440 kJ/h als die spezifische Verbrennungswärme des flüssigen Brennstoffes angesetzt.

Die Gesamtwärmemenge, die für die thermische Zersetzung der Abfälle im Thermolyseofen 20 erforderlich ist, wird wie folgt bestimmt:

$$Q_{Ges.} = Q_{Erw.} + Q_{Zers.} + Q_{Verl.}, \text{ d.h. } Q_{Ges.} = 1{,}2 \{(Cp_{Abf.} \cdot M_{Abf.} (T_2 - T_1) + qM_{Abf.})\}.$$

$$Q_{Ges.} = 1{,}2 \{(1{,}4 \text{ kJ/kg} \cdot 400 \text{ kg} (500 \text{ °C} - 100 \text{ °C}) + 600 \text{ kJ/kg} \cdot 400 \text{ kg})\} = 556.800 \text{ kJ,}$$

wobei $Q_{Ges.}$ - Gesamtwärmemenge, welche für die thermische Zersetzung erforderlich ist; $Q_{Erw}$ - Wärmemenge zur Erwärmung der Abfälle auf 500 °C; $Q_{Zers.}$ - Wärmemenge, die für die Zersetzung der Abfälle aufgewendet wird; $Q_{Verl.}$ - Wärmeverluste, welche 20 % der Wärmemenge zur Erwärmung und Zersetzung betragen; q - spezifische Zersetzungswärme, welche für Gummiabfälle 600 kJ/kg beträgt; $M_{Abf.}$ - Masse der Abfälle; $T_1$ und $T_2$ - Anfangs- und Endtemperatur der Abfälle. In unserem Falle wurde die Anfangstemperatur der Abfälle mit 100 °C angesetzt, da bereits in der Beschickungskammer die Abfälle infolge der Wärmeübertragung von der auf 200 °C erwärmten Oberfläche der Tür 22 des Thermolyseofens und der Wärmeübertragung von dem erwärmten Mantel 14 von 20 °C auf 100 °C erwärmt werden.

Da ein Teil der Wärme dem Thermolyseofen über die Wand des Ofens 13 zugeführt wird (150.000 kJ/h), ein Teil der Wärme über den Mantel von den Verbrennungsprodukten des Brennstoffes im Ofen 13 zugeführt wird (66.330 kJ/h) und innerhalb von 120 Minuten (150.000 kJ/h + 66.330 kJ/h) . 2h = 432.660 kJ Wärme zugeführt werden, ist es erforderlich, mit überhitztem Dampf die folgende Wärmemenge zuzuführen: (556.800 - 432.660) kJ = 124.140 kJ. Folglich hat die erforderliche Menge an überhitztem Wasserdampf G ($_{Dampf} T_{Ein}$ = 700 °C und $T_{Aus}$ = 450 °C, $C_{Dampf}$ = 2 kJ/kg°C) folgenden Wert:

$$G_{Dampf} = \{(124.140 \text{ kJ}) / 2 \text{ kJ/kg°C } (655 \text{ °C} - 500 \text{ °C})\} / 2 \text{ h} = 200 \text{ kg/h}.$$

Aus dem Dampferzeuger 5 wird über den Hahn 16 dem Wärmetauscher 17 Wasserdampf mit einem Durchfluss von 200 kg/h zugeführt, welcher sich, während er den Wärmetauscher durchströmt, auf eine Temperatur von 655 °C erwärmt. Hierbei wird die Überhitzungstemperatur des Dampfes anhand der Anzeigewerte des Temperatursensors 18 kontrolliert. Der überhitzte Wasserdampf aus dem Wärmetauscher 17 wird mit einem Durchfluss von 200 kg/h über den Hahn 19 dem Thermolyseofen 20 zugeführt. Infolge der Zuführung des auf 655 °C überhitzten Dampfes und des Wärmeaustausches mit der Wand des Ofens 13 und der Wand des Mantels 14 erhöht sich im Thermolyseofen 20 die Temperatur des Dampf-Gas-Mediums auf 500 °C, was anhand der Anzeigewerte des Temperatursensors 21 kontrolliert wird. Nachdem im Thermolyseofen 20 eine Temperatur von 500 °C erreicht worden ist, wird die Tür 22 geöffnet, und mit Hilfe des Rollgangs 1 werden die zwei Stapel abgenutzter Reifen aus der Beschickungskammer 4 in den Thermolyseofen 20 transportiert. Danach wird die Tür 22 geschlossen. Im Thermolyseofen 20 findet infolge des Wärmeaustausches mit dem Dampf-Gas-Medium innerhalb von 60 Minuten eine Erwärmung der abgenutzten Reifen auf eine Temperatur von 300 °C statt, und es beginnt ein Prozess der thermischen Zersetzung des Gummis, welcher 60 Minuten lang abläuft.

In unserem Falle bilden sich gasförmige (160 kg) und feste (240 kg) Zersetzungsprodukte der abgenutzten Reifen. Die gasförmigen Zersetzungsprodukte werden über den Hahn 23 in den Kondensator 24 abgeführt. Gleichzeitig mit der Abführung der gasförmigen Produkte wird durch den Mantel des Kondensators 24 mit Hilfe der Wasserpumpe 25 aus dem Behälter 26 Kühlwasser hindurchgepumpt.

Infolge des Wärmeaustausches mit den gasförmigen Zersetzungsprodukten der abgenutzten Reifen erwärmt sich das Kühlwasser. Das erwärmte Wasser wird aus dem Mantel des Kondensators 24 in den Behälter 26 zurückgeführt. Anschließend wird das erwärmte Wasser aus dem Behälter 26 dem Radiator mit einem Ventilator 27 zugeführt, wo infolge des Wärmeaustausches mit dem Luftstrom, der von dem Ventilator erzeugt wird, das Wasser auf eine Temperatur von 30 °C abgekühlt und in den Behälter 26 zurückgeführt wird. Die Temperatur der Kühlung des Wassers wird anhand der Anzeigewerte des Temperatursensors 28 kontrolliert und durch Änderung der Drehzahl des Ventilators und die dadurch bewirkte Regelung des Kühlluftstroms durch den Radiator auf 30 °C eingestellt.

In dem Kondensator 24 werden die gasförmigen Zersetzungsprodukte der abgenutzten Reifen und der Wasserdampf abgekühlt, wodurch der Wasserdampf und ein Teil der gasförmigen Zersetzungsprodukte unter Bildung von Wasser und einer flüssigen Fraktion kondensieren.

Es werde angenommen, dass in unserem Falle 90 % der dampf- und gasförmigen Produkte kondensieren, d.h. 0,9 x 160 kg/h = 144 kg/h (der Prozess der Kondensation der dampf- und gasförmigen Produkte läuft 2 h ab). Die Kondensationswärme dieser Produkte beträgt 300 kJ/kg, und ihre Wärmekapazität im gasförmigen Zustand beträgt 3 kJ/kg°C. In diesem Falle wird im Kondensator 24 infolge der Abkühlung und Kondensation eines Teils der dampf- und gasförmigen Produkte die folgende Wärmemenge freigesetzt:

.

$$Q = C_{gdP} \cdot M_{gdP} (T_{EingdP} - T_{AusgdP}) + q_{KondgdP} M_{gdP} = 3 \text{ kJ/kg°C} \cdot 72 \text{ kg/h} (500 - 100)\text{°C} +$$

$$300 \text{ kJ/kg} \cdot 72 \text{ kg/h} = 108.000 \text{ kJ/h},$$

wobei $C_{gdP}$ - spezifische Wärmekapazität der dampf- und gasförmigen Produkte; $M_{gdP}$ - Masse der dampf- und gasförmigen Produkte; $T_{Eingdp}$ und $T_{AusgdP}$ - Eintrittstemperatur der dampf- und gasförmigen Produkte in den Wärmetauscher und Austrittstemperatur derselben aus dem Wärmetauscher; $q_{KondgdP}$ - spezifische Kondensationswärme der dampf- und gasförmigen Produkte.

Gleichzeitig kühlt sich im Kondensator 24 Wasserdampf in einer Menge von 200 kg/h ab und kondensiert. Hierbei beträgt die freigesetzte Wärmemenge:

$$Q = C_{Wd} \cdot M_{Wd} (T_{EingdP} - T_{AusgdP}) + r_{Wd} M_{Wd} = 2 \text{ kJ/kg°C} \cdot 200 \text{ kg/h} (500 - 100)\text{°C} +$$

$$2500 \text{ kJ/kg} \cdot 200 \text{ kg/h} = 660.000 \text{ kJ/h},$$

wobei $C_{Wd}$ - spezifische Wärmekapazität des Wasserdampfes, 2 kJ/kg°C; $M_{Wd}$ - Masse des Wasserdampfes; $r_{wd}$ - spezifische Kondensationswärme des Wasserdampfes, 2.500 kJ/kg.

Somit ist es im Kondensator erforderlich, die folgende Wärmemenge abzuführen: 108.000 kJ/h + 660.000 kJ/h = 768.000 kJ/h.

Für die Abführung einer solchen Wärmemenge ist die folgende Menge an Kühlwasser erforderlich:

$$M_{Wasser} = Q / \{Cp_{Wasser} (T_{Austritt} - T_{Eintritt})\} = 768.000 \text{ kJ/h} / \{4,18 \text{ kJ/kg°C} (80 \text{ °C} -$$

$$30 \text{ °C})\} = 3674 \text{ kg/h},$$

wobei $C_{Pwasser}$ - spezifische Wärmekapazität des Wassers, 4,18 kJ/kg°C; $T_{Eintritt}$, $T_{Austritt}$ - Temperatur des Kühlwassers beim Eintritt in den Mantel des Kondensators und beim Austritt aus dem Mantel.

Das sich bildende Gemisch aus Wasser und der flüssigen Fraktion in einer Menge von 72 kg/h + 200 kg/h = 272 kg/h wird über den Hahn 29 aus dem Kondensator 24 in den Separator 30 abgeführt, wo die flüssige Fraktion in einer Menge von 72 kg/h von dem Wasser getrennt wird. Danach wird die flüssige Fraktion aus dem Separator 30 über den Hahn 31 in einer Menge von 72 kg/h der Rektifikationskolonne 32 zugeführt, und das Wasser wird in einer Menge von 200 kg/h dem Sammelbehälter 33 zugeführt. Aus dem Sammelbehälter 33 wird über das Filter 34 und den Hahn 35 das gereinigte Wasser in den Dampferzeuger 5 zur Gewinnung von Betriebswasserdampf zurückgeführt.

In der Rektifikationskolonne 32 wird die flüssige Fraktion mit Hilfe der elektrischen Heizvorrichtung 36 erwärmt, die an das Dieselkraftwerk 37 angeschlossen ist. Die sich infolge der Erwärmung der flüssigen Fraktion bildenden Dämpfe gelangen aus der Kolonne 32 in den Dephlegmator 38, wo sie infolge des Wärmeaustausches mit dem Kühlwasser, das über den Hahn 39 dem Mantel des Dephlegmators zugeführt wird und über den Hahn 40 aus dem Mantel abgeführt wird, teilweise kondensieren. Ein Teil des Kondensats der Dämpfe (Phlegma) fließt über den Verteiler 41 zurück in die Kolonne 32, und der andere Teil (Destillat) gelangt in den Kondensator 42, der mit Wasser gekühlt wird, welches über den Hahn 43 zugeführt wird. Aus dem Kondensator 42 gelangt das Destillat mit einer Siedetemperatur bis 250 °C in einer Menge von 16 kg/h in den Aufnahmebehälter 44, aus welchem über den Hahn 45 ein Teil des Destillats in einer Menge von 8 kg/h als Brennstoff dem Motor des Dieselkraftwerks zugeführt wird.

Der Rest der flüssigen Fraktion mit einer Siedetemperatur über 250 °C wird in einer Menge von 56 kg/h über den Hahn 46 in den Behälter 6 abgelassen.

Die nicht kondensierten gasförmigen Produkte der thermischen Zersetzung in einer Menge von 16 kg/h (Verbrennungswärme 22.220 kJ/kg) werden aus dem Kondensator 24 über den Hahn 47 dem Brenner 9 des Dampferzeugers 5 zugeführt und verbrannt. Hierbei wird der Durchfluss des Brennstoffes , der aus dem Behälter 6 dem Brenner 9 zugeführt wird, auf (18 kg/h - 8 kg/h) = 10 kg/h verringert.

Nach Beendigung des Prozesses der thermischen Zersetzung der abgenutzten Reifen (der Zeitpunkt der Beendigung des Prozesses wird mit Hilfe des Sensors 48 bestimmt, der den Gehalt an flüssigen Zersetzungsprodukten in dem Wasser, das in den Separator 30 gelangt, kontrolliert) werden die festen Zersetzungsprodukte aus dem Thermolyseofen 20 in die Kühlkammer 49 abgeführt. Hierzu werden die Türen 50 geöffnet, und die festen Produkte fallen infolge ihres Eigengewichts aus dem Thermolyseofen in die Kühlkammer 49. Danach werden die Türen 50 geschlossen. Die Türen 22 werden geöffnet, und der nächste Stapel abgenutzter Reifen wird dem Thermolyseofen zugeführt.

Nach dem Austrag der festen Zersetzungsprodukte der Reifen in die Kühlkammer wird Wasser aus dem Behälter 33 über das Zerstäubungssystem 51 zerstäubt. Das Wasser kühlt die festen Produkte auf 100 °C ab. Die sich bildenden Wasserdämpfe erhöhen den Druck in der Kühlkammer und strömen über das Ventil 52 in den Thermolyseofen aus.

Mit dem Wasserdampf wird die Wärme der Kühlung des festen Rückstandes in den Thermolyseofen zurückgeführt, was zu einer Senkung des Verbrauches an Energieressourcen für den Prozess der Verarbeitung der Gummiabfälle führt.

Die Temperatur der Kühlung der festen Produkte wird anhand der Anzeigewerte des Temperatursensors 53 kontrolliert.

Für die Abkühlung der festen Produkte von 500 °C auf 100 °C ist die folgende Wassermenge erforderlich:

$$M_{Wasser} = \{C_{fP} \cdot M_{fP}\,(500\,°C - 100\,°C)\} : \{Cp_{Wasser}\,(100\,°C - 30\,°C) + r_{wd}\} = \{0,8\,kJ/kg°C$$

$$\cdot\;120\,kg/h \cdot 400\,°C\} : \{4,18\,kJ/kg°C \cdot 70\,°C + 2.500\,kJ/kg\} = 13,7\,kg/h,$$

.

wobei $C_{fp}$ - spezifische Wärmekapazität der festen Produkte, 0,8 kJ/kg°C; $M_{fp}$ - Menge der zu kühlenden festen Produkte pro Stunde, kg/h; $r_{wd}$ - Verdampfungswärme des Wassers (gleich der Kondensationswärme des Dampfes), 2.500 kJ/kg.

Nach der Abkühlung auf 100 °C werden die festen Produkte aus der Kühlkammer in den Sammelbehälter 54 ausgetragen. Hierzu wird der Schieberverschluss 55 geöffnet, und die festen Produkte fallen infolge ihres Eigengewichts in den Behälter 54. Der Schieberverschluss 55 wird nach dem Austrag der festen Produkte geschlossen.

Beispiel 2.

Auf dem Rollgang 1 werden Stapel aus abgenutzten Reifen mit einem Gewicht von 200 kg durch Ablegen der Reifen aufeinander gebildet. Falls ein Reifen ein Gewicht von 20 kg hat, müssen zwei Stapel aus je 5 Reifen gebildet werden. Die geometrischen Abmessungen eines Stapels sind dann folgende: Durchmesser - 0,8 m, Höhe - 0,9 m.

Nach der Bildung der Stapel wird die Tür 2 geöffnet, der Motor 3 wird eingeschaltet, welcher den Rollgang 1 in Gang setzt, und die beiden Reifenstapel werden in die Beschickungskammer 4 transportiert; anschließend wird die Tür 2 geschlossen. Nach dem Transport der Reifenstapel in die Beschickungskammer wird der Dampferzeuger 5 in Betrieb gesetzt. Hierzu wird aus dem Behälter mit flüssigem Brennstoff 6 über die Hähne 7 und 8 dem Brenner 9 des Dampferzeugers flüssiger Brennstoff mit einem Durchfluss von 4 kg/h zugeführt und verbrannt, zur Gewinnung von 19,1 kg/h Wasserdampf bei T = 140 °C und einem Druck von 3,6 atm (0,36 MPa). Die Verbrennungsprodukte des Brennstoffes, in einer Menge von 48,8 kg/h (bei der Verbrennung von 1 kg Brennstoff bilden sich 12,22 kg Verbrennungsprodukte), werden in das Rauchabzugsrohr 10 abgeführt.

Gleichzeitig wird aus dem Behälter 6 über die Hähne 7 und 11 dem Brenner 12 des Ofens 13 flüssiger Brennstoff mit einem Durchfluss von 7 kg/h zugeführt und verbrannt, zur Überhitzung von 19,1 kg/h Wasserdampf von T = 140 °C auf T = 700 °C und Erwärmung des Arbeitsmediums im Thermolyseofen.

Die Verbrennungsprodukte des Brennstoffes (Temperatur bis 800 °C) in einer Menge von 85,5 kg/h werden aus dem Ofen 13 über den Mantel 14 in das Rauchabzugsrohr 15 abgeführt.

Beim Durchströmen des Mantels 14 werden im Thermolyseofen die Verbrennungsprodukte auf eine Temperatur von 450 °C abgekühlt, und während sie weiter durch den Mantel in der Beschickungskammer strömen, werden sie auf 250 °C abgekühlt und in die Umwelt ausgestoßen. Dabei hat die Wärmemenge, die von den Verbrennungsprodukten in den Thermolyseofen abgegeben wird, folgenden Wert:

$$Q_{Verbrennungsprod.1} = M_{Verbrennungsprod.}\;C_{Verbrennungsprod.}\;(T_2 - T_1) =$$

$$85,5\,kg/h \cdot 1,34\,kJ/kg°C\,(800\,°C - 450\,°C) =$$

$$40099,5\,kJ/h,$$

wobei $M_{Verbrennungsprod.}$ - Menge der Verbrennungsprodukte, kg/h; $C_{Verbrennungsprod.}$ = spezifische Wärmekapazität der Verbrennungsprodukte, kJ/kg°C; $T_1$ und $T_2$ - Eintrittstemperatur der Verbrennungsprodukte in den Mantel 14 im Thermolyseofen und Austrittstemperatur derselben aus dem Mantel im Thermolyseofen.

In der Beschickungskammer wird Wärme von den Verbrennungsprodukten auf die Gummiabfälle übertragen. Diese Wärmemenge ist folgende:

$$Q_{Verbrennungsprod.2} = M_{Verbrennungsprod.}\;C_{Verbrennungsprod.}\;(T_4 - T_3) =$$

$$85,5\,kg/h \cdot 1,34\,kJ/kg°C\,(450\,°C - 250\,°C) =$$

$$22.914\,kJ/h,$$

wobei $T_3$ und $T_4$ - Eintrittstemperatur der Verbrennungsprodukte in den Mantel in der Beschickungskammer 4 und Austrittstemperatur derselben in die Umwelt.

Da der Ofen 13 eine gemeinsame Wand mit dem Thermolyseofen aufweist, wird Wärme von der Wand durch Konvektion und Wärmestrahlung (die Wand ist auf 800 °C erhitzt) auf die abgenutzten Reifen übertragen, und die Menge dieser Wärme beträgt 25 % der im Ofen 13 freigesetzten Wärme bei Verbrennung von 7 kg/h flüssigem Brennstoff, d.h. diese Wärmemenge ist gleich 0,25 . 7 kg/h . 44.440 kJ/kg = 77.770 kJ/h. Dabei wurden 44.440 kJ/h als die spezifische Verbrennungswärme des flüssigen Brennstoffes angesetzt.

Die Gesamtwärmemenge, die für die thermische Zersetzung der Abfälle im Thermolyseofen 20 erforderlich ist, wird wie folgt bestimmt:

$$Q_{Ges.} = Q_{Erw.} + Q_{Zers.} + Q_{Verl.}, \text{ d.h. } Q_{Ges.} = 1,2 \{(Cp_{Abf.} . M_{Abf.} (T_2 - T_1) + qM_{Abf.})\}.$$

$$Q_{Ges.} = 1,2 \{(1,4 \text{ kJ/kg} . 200 \text{ kg} (450 °C - 120 °C) + 600 \text{ kJ/kg} . 200 \text{ kg})\} = 254.880 \text{ kJ},$$

wobei $Q_{Ges.}$ - Gesamtwärmemenge, welche für die thermische Zersetzung erforderlich ist; $Q_{Erw.}$ - Wärmemenge zur Erwärmung der Abfälle auf 450 °C; $Q_{Zers.}$ - Wärmemenge, die für die Zersetzung der Abfälle aufgewendet wird; $Q_{Verl.}$ - Wärmeverluste, welche 20 % der Wärmemenge zur Erwärmung und Zersetzung betragen; q - spezifische Zersetzungswärme, welche für Gummiabfälle 600 kJ/kg beträgt; $M_{Abf.}$ - Masse der Abfälle; $T_1$ und $T_2$ - Anfangs- und Endtemperatur der Abfälle. In unserem Falle wurde die Anfangstemperatur der Abfälle mit 120 °C angesetzt, da bereits in der Beschickungskammer die Abfälle infolge der Wärmeübertragung von der auf 200 °C erwärmten Oberfläche der Tür 22 des Thermolyseofens und der Wärmeübertragung von dem erwärmten Mantel 14 von 20 °C auf 120 °C erwärmt werden.

Da ein Teil der Wärme dem Thermolyseofen über die Wand des Ofens 13 zugeführt wird (77.770 kJ/h), ein Teil der Wärme über den Mantel von den Verbrennungsprodukten des Brennstoffes im Ofen 13 zugeführt wird (40.099 kJ/h) und innerhalb von 120 Minuten (77.770 kJ/h + 40.099,5 kJ/h) . 2h = 235.739 kJ Wärme zugeführt werden, ist es erforderlich, mit überhitztem Dampf die folgende Wärmemenge zuzuführen: (254.880 - 235.739) kJ = 19.141 kJ. Folglich hat die erforderliche Menge an überhitztem Wasserdampf $G_{Dampf}$ ($T_{Ein}$ = 700 °C und $T_{Aus}$ = 450 °C, $C_{Dampf}$ = 2 kJ/kg°C) folgenden Wert:

$$G_{Dampf} = \{(19.141 \text{ kJ}) / 2 \text{ kJ/kg°C} (700 °C - 450 °C)\} / 2 \text{ h} = 19,1 \text{ kg/h}.$$

Aus dem Dampferzeuger 5 wird über den Hahn 16 dem Wärmetauscher 17 Wasserdampf mit einem Durchfluss von 19,1 kg/h zugeführt, welcher sich, während er den Wärmetauscher durchströmt, auf eine Temperatur von 700 °C erwärmt. Hierbei wird die Überhitzungstemperatur des Dampfes anhand der Anzeigewerte des Temperatursensors 18 kontrolliert. Der überhitzte Wasserdampf aus dem Wärmetauscher 17 wird mit einem Durchfluss von 19,1 kg/h über den Hahn 19 dem Thermolyseofen 20 zugeführt. Infolge der Zuführung des auf 700 °C überhitzten Dampfes und des Wärmeaustausches mit der Wand des Ofens 13 und der Wand des Mantels 14 erhöht sich im Thermolyseofen 20 die Temperatur des Dampf-Gas-Mediums auf 450 °C, was anhand der Anzeigewerte des Temperatursensors 21 kontrolliert wird. Nachdem im Thermolyseofen 20 eine Temperatur von 450 °C erreicht worden ist, wird die Tür 22 geöffnet, und mit Hilfe des Rollgangs 1 werden die zwei Stapel abgenutzter Reifen aus der Beschickungskammer 4 in den Thermolyseofen 20 transportiert. Danach wird die Tür 22 geschlossen. Im Thermolyseofen 20 findet infolge des Wärmeaustausches mit dem Dampf-Gas-Medium innerhalb von 60 Minuten eine Erwärmung der abgenutzten Reifen auf eine Temperatur von 300 °C statt, und es beginnt ein Prozess der thermischen Zersetzung des Gummis, welcher 60 Minuten lang abläuft.

In unserem Falle bilden sich gasförmige (80 kg) und feste (120 kg) Zersetzungsprodukte der abgenutzten Reifen. Die gasförmigen Zersetzungsprodukte werden über den Hahn 23 in den Kondensator 24 abgeführt. Gleichzeitig mit der Abführung der gasförmigen Produkte wird durch den Mantel des Kondensators 24 mit Hilfe der Wasserpumpe 25 aus dem Behälter 26 Kühlwasser hindurchgepumpt.

Infolge des Wärmeaustausches mit den gasförmigen Zersetzungsprodukten der abgenutzten Reifen erwärmt sich das Kühlwasser. Das erwärmte Wasser wird aus dem Mantel des Kondensators 24 in den Behälter 26 zurückgeführt. Anschließend wird das erwärmte Wasser aus dem Behälter 26 dem Radiator mit einem Ventilator 27 zugeführt, wo infolge des Wärmeaustausches mit dem Luftstrom, der von dem Ventilator erzeugt wird, das Wasser auf eine Temperatur von 30 °C abgekühlt und in den Behälter 26 zurückgeführt wird. Die Temperatur der Kühlung des Wassers wird anhand der Anzeigewerte des Temperatursensors 28 kontrolliert und durch Änderung der Drehzahl des Ventilators und die dadurch bewirkte Regelung des Kühlluftstroms durch den Radiator auf 30 °C eingestellt.

In dem Kondensator 24 werden die gasförmigen Zersetzungsprodukte der abgenutzten Reifen und der Wasserdampf abgekühlt, wodurch der Wasserdampf und ein Teil der gasförmigen Zersetzungsprodukte unter Bildung von Wasser und einer flüssigen Fraktion kondensieren.

Es werde angenommen, dass in unserem Falle 90 % der dampf- und gasförmigen Produkte kondensieren, d.h. 0,9 x 80 kg/h = 72 kg/h (der Prozess der Kondensation der dampf- und gasförmigen Produkte läuft 2 h ab). Die Kondensationswärme dieser Produkte beträgt 300 kJ/kg, und ihre Wärmekapazität im gasförmigen Zustand beträgt 3 kJ/kg°C. In diesem Falle wird im Kondensator 24 infolge der Abkühlung und Kondensation eines Teils der dampf- und gasförmigen Produkte die folgende Wärmemenge freigesetzt:

$$Q = C_{gdP} \cdot M_{gdP} (T_{EingdP} - T_{AusgdP}) + q_{KondgdP} M_{gdP} = 3 \text{ kJ/kg°C} \cdot 36 \text{ kg/h} (450 - 100)°C +$$
$$300 \text{ kJ/kg} \cdot 36 \text{ kg/h} = 48.600 \text{ kJ/h,}$$

wobei $C_{gdP}$ - spezifische Wärmekapazität der dampf- und gasförmigen Produkte; $M_{gdp}$ - Masse der dampf- und gasförmigen Produkte; $T_{EingdP}$ und $T_{AusgdP}$ - Eintrittstemperatur der dampf- und gasförmigen Produkte in den Wärmetauscher und Austrittstemperatur derselben aus dem Wärmetauscher; $q_{KondgdP}$ - spezifische Kondensationswärme der dampf- und gasförmigen Produkte.

Gleichzeitig kühlt sich im Kondensator 24 Wasserdampf in einer Menge von 19,1 kg/h ab und kondensiert. Hierbei beträgt die freigesetzte Wärmemenge:

$$Q = C_{Wd} \cdot M_{Wd} (T_{EingdP} - T_{AusgdP}) + r_{Wd} M_{Wd} = 2 \text{ kJ/kg°C} \cdot 19,1 \text{ kg/h} (450 - 100)°C +$$
$$2500 \text{ kJ/kg} \cdot 19,1 \text{ kg/h} = 61.120 \text{ kJ/h,}$$

wobei $C_{Wd}$ - spezifische Wärmekapazität des Wasserdampfes, 2 kJ/kg°C; $M_{Wd}$ - Masse des Wasserdampfes; $r_{wd}$ - spezifische Kondensationswärme des Wasserdampfes, 2.500 kJ/kg.

Somit ist es im Kondensator erforderlich, die folgende Wärmemenge abzuführen: 48.600 kJ/h + 61.120 kJ/h = 109.720 kJ/h.

Für die Abführung einer solchen Wärmemenge ist die folgende Menge an Kühlwasser erforderlich:

$$M_{Wasser} = Q / \{C_{PWasser} (T_{Austritt} - T_{Eintritt})\} = 109.720 \text{ kJ/h} / \{4,18 \text{ kJ/kg°C} (80 \text{ °C} -$$
$$30 \text{ °C})\} = 525 \text{ kg/h,}$$

wobei $C_{PWasser}$ - spezifische Wärmekapazität des Wassers, 4,18 kJ/kg°C; $T_{Eintritt}$, $T_{Austritt}$ - Temperatur des Kühlwassers beim Eintritt in den Mantel des Kondensators und beim Austritt aus dem Mantel.

Das sich bildende Gemisch aus Wasser und der flüssigen Fraktion in einer Menge von 36 kg/h + 19,1 kg/h = 55,1 kg/h wird über den Hahn 29 aus dem Kondensator 24 in den Separator 30 abgeführt, wo die flüssige Fraktion in einer Menge von 36 kg/h von dem Wasser getrennt wird. Danach wird die flüssige Fraktion aus dem Separator 30 über den Hahn 31 in einer Menge von 36 kg/h der Rektifikationskolonne 32 zugeführt, und das Wasser wird in einer Menge von 19,1 kg/h dem Sammelbehälter 33 zugeführt. Aus dem Sammelbehälter 33 wird über das Filter 34 und den Hahn 35 das gereinigte Wasser in den Dampferzeuger 5 zur Gewinnung von Betriebswasserdampf zurückgeführt.

In der Rektifikationskolonne 32 wird die flüssige Fraktion mit Hilfe der elektrischen Heizvorrichtung 36 erwärmt, die an das Dieselkraftwerk 37 angeschlossen ist. Die sich infolge der Erwärmung der flüssigen Fraktion bildenden Dämpfe gelangen aus der Kolonne 32 in den Dephlegmator 38, wo sie infolge des Wärmeaustausches mit dem Kühlwasser, das über den Hahn 39 dem Mantel des Dephlegmators zugeführt wird und über den Hahn 40 aus dem Mantel abgeführt wird, teilweise kondensieren. Ein Teil des Kondensats der Dämpfe (Phlegma) fließt über den Verteiler 41 zurück in die Kolonne 32, und der andere Teil (Destillat) gelangt in den Kondensator 42, der mit Wasser gekühlt wird, welches über den Hahn 43 zugeführt wird. Aus dem Kondensator 42 gelangt das Destillat mit einer Siedetemperatur bis 250 °C in einer Menge von 7,2 kg/h in den Aufnahmebehälter 44, aus welchem über den Hahn 45 ein Teil des Destillats in einer Menge von 5 kg/h als Brennstoff dem Motor des Dieselkraftwerks zugeführt wird.

Der Rest der flüssigen Fraktion mit einer Siedetemperatur über 250 °C wird in einer Menge von 28,8 kg/h über den Hahn 46 in den Behälter 6 abgelassen.

Die nicht kondensierten gasförmigen Produkte der thermischen Zersetzung in einer Menge von 8 kg/h (Verbrennungswärme 22.220 kJ/kg) werden aus dem Kondensator 24 über den Hahn 47 dem Brenner 9 des Dampferzeugers 5 zugeführt und verbrannt. Hierbei wird der Durchfluss des Brennstoffes , der aus dem Behälter 6 dem Brenner 9 zugeführt wird, auf (4 kg/h - 0 kg/h) = 0 kg/h verringert, d.h. die Zufuhr von flüssigem Brennstoff zum Brenner 9 des Dampferzeugers wird vollständig beendet. Nach Beendigung des Prozesses der thermischen Zersetzung der abgenutzten Reifen (der Zeitpunkt der Beendigung des Prozesses wird mit Hilfe des Sensors 48 bestimmt, der den Gehalt an flüssigen Zersetzungsprodukten in dem Wasser, das in den Separator 30 gelangt, kontrolliert) werden die festen Zersetzungsprodukte aus dem Thermolyseofen 20 in die Kühlkammer 49 abgeführt. Hierzu werden die Türen 50 geöffnet, und die festen Produkte fallen infolge ihres Eigengewichts aus dem Thermolyseofen in die Kühlkammer 49. Danach werden die Türen 50 geschlossen. Die Türen 22 werden geöffnet, und der nächste Stapel abgenutzter Reifen wird dem Thermolyseofen zugeführt.

Nach dem Austrag der festen Zersetzungsprodukte der Reifen in die Kühlkammer wird Wasser aus dem Behälter 33 über das Zerstäubungssystem 51 zerstäubt. Das Wasser kühlt die festen Produkte auf 100 °C ab. Die sich bildenden Wasserdämpfe erhöhen den Druck in der Kühlkammer und strömen über das Ventil 52 in den Thermolyseofen aus.

Mit dem Wasserdampf wird die Wärme der Kühlung des festen Rückstandes in den Thermolyseofen zurückgeführt, was zu einer Senkung des Verbrauches an Energieressourcen für den Prozess der Verarbeitung der Gummiabfälle führt.

Die Temperatur der Kühlung der festen Produkte wird anhand der Anzeigewerte des Temperatursensors 53 kontrolliert.

Für die Abkühlung der festen Produkte von 450 °C auf 100 °C ist die folgende Wassermenge erforderlich:

$$M_{Wasser} = \{C_{fP} \cdot M_{fP} (450\ °C - 100\ °C)\} : \{Cp_{Wasser} (100\ °C - 30\ °C) + r_{wd}\} = \{0,8\ kJ/kg°C \cdot 60\ kg/h \cdot 350\ °C\} : \{4,18\ kJ/kg°C \cdot 70\ °C + 2.500\ kJ/kg\} = 6\ kg/h,$$

wobei $C_{fp}$ - spezifische Wärmekapazität der festen Produkte, 0,8 kJ/kg°C; $M_{fp}$ - Menge der zu kühlenden festen Produkte pro Stunde, kg/h; $r_{wd}$ - Verdampfungswärme des Wassers (gleich der Kondensationswärme des Dampfes), 2.500 kJ/kg.

Nach der Abkühlung auf 100 °C werden die festen Produkte aus der Kühlkammer in den Sammelbehälter 54 ausgetragen. Hierzu wird der Schieberverschluss 55 geöffnet, und die festen Produkte fallen infolge ihres Eigengewichts in den Behälter 54. Der Schieberverschluss 55 wird nach dem Austrag der festen Produkte geschlossen.

Durch die Verwendung eines Teils der Gummiabfälle zur Energieversorgung des Verarbeitungsprozesses wird Effekt der Verringerung der Energieintensität erzielt, da im Gegensatz zu den bekannten Verarbeitungstechnologien (Zerkleinerung, Pyrolyse, thermische Destruktion in Ölen u.a.) die Notwendigkeit von zusätzlichem Brennstoff entfällt, was wiederum eine Verringerung des Ausstoßes von Verbrennungsprodukten in die Umwelt gewährleistet.

Informationsquellen:

1. Französisches Patent Nr. 2279836, Kl. C 08J11/10, 1976.

2. Patent der Russischen Föderation Nr. 2076501, Kl. 6B2917/11, C08J11/14, 1997.

3. Lettisches Patent Nr. 12890, Kl. C10B53/02, C08J11/00, C08J11/14, 2002.

4. Urheberschein der UdSSR Nr. 1783038, Kl. E01 H 12/00, 1992.

**Bezugszeichenliste:**

| | |
|---|---|
| 1 | Rollgang |
| 2 | Tür |
| 3 | Motor |
| 4 | Beschickungskammer |
| 5 | Dampferzeuger |
| 6 | Behälter |
| 7 | Hahn |
| 8 | Hahn |
| 9 | Brenner |
| 10 | Rauchabzugsrohr |
| 11 | Hahn |
| 12 | Brenner |
| 13 | Ofen |
| 14 | Mantel |
| 15 | Rauchabzugsrohr |
| 16 | Hahn |
| 17 | Wärmetauscher |
| 18 | Temperatursensor |
| 19 | Hahn |
| 20 | Thermolyseofen |
| 21 | Temperatursensor |
| 22 | Tür |
| 23 | Hahn |
| 24 | Kondensator |
| 25 | Wasserpumpe |
| 26 | Behälter |
| 27 | Radiator |

| | |
|---|---|
| 28 | Temperatursensor |
| 29 | Hahn |
| 30 | Separator |
| 31 | Hahn |
| 32 | Rektifikationskolonne |
| 33 | Sammelbehälter |
| 34 | Filter |
| 35 | Hahn |
| 36 | Heizvorrichtung |
| 37 | Dieselkraftwerk |
| 38 | Dephlegmator |
| 39 | Hahn |
| 40 | Hahn |
| 41 | Verteiler |
| 42 | Kondensator |
| 43 | Hahn |
| 44 | Aufnahmebehälter |
| 45 | Hahn |
| 46 | Hahn |
| 47 | Hahn |
| 48 | Sensor |
| 49 | Kühlkammer |
| 50 | Tür |
| 51 | Wasserzerstäubungssystem |
| 52 | Ventil |
| 53 | Temperatursensor |
| 54 | Sammelbehälter |
| 55 | Schieberverschluss |

**Patentansprüche**

1. Vorrichtung für die Verarbeitung organischer Abfälle, mit einem auf einem Gestell, insbesondere Fahrgestell montierten Dampfkessel mit Ofen und einem vor dem Ofen eingestellten bzw. angeordneten Förderer, **gekennzeichnet durch** eine Schleusenkammer, einen Thermolyse-Ofen und eine Kühlkammer, wobei Mittel zur insbesondere hermetischen Abdichtung der Schleusenkammer, des Thermolyse-Ofens und/oder der Kühlkammer vorhanden sind.

2. Vorrichtung nach Anspruch 1, **dadurch gekennzeichnet, dass** der Förderer durch die Schleusenkammer hindurchläuft.

3. Vorrichtung nach Anspruch 1 oder 2, **dadurch gekennzeichnet, dass** der Thermolyse-Ofen ausgestattet ist mit einem Kondensator einer gasförmigen Phase, mit einem Separator zur Trennung des Kondensats in Wasser und eine flüssige Fraktion, und mit einem Mittel zur Rektifikation der flüssigen Fraktion.

4. Vorrichtung nach Anspruch 3, **dadurch gekennzeichnet, dass** der Kondensator ein Mittel zur kontinuierlichen Abführung von Wärmeenergie in die Umwelt aufweist, wobei ein Eingang des Kondensators insbesondere an einen oberen Bereich des Thermolyse-Ofens angeschlossen ist, vorzugsweise mittels einer Rohrleitung.

5. Vorrichtung nach Anspruch 3 oder 4, **dadurch gekennzeichnet, dass** ein Ausgang des Kondensators insbesondere durch eine Rohrleitung mit dem Separator verbunden ist.

6. Vorrichtung nach Anspruch 1 oder einem der weiteren Ansprüche, **dadurch gekennzeichnet, dass** die Kühlkammer einen Wasserzerstäuber enthält sowie vorzugsweise einen Behälter, welcher insbesondere mittels Rohrleitungen an den Wasserauslass aus dem Separator und insbesondere an die Wassereinlässe in den Zerstäuber und in den Dampfkessel angeschlossen ist.

7. Vorrichtung nach Anspruch 1 oder einem der weiteren Ansprüche, **dadurch gekennzeichnet, dass** zusätzlich ein Dieselkraftwerk vorgesehen ist, welches vorzugsweise an den Ausgang einer flüssigen Phase insbesondere mit einem Siedebereich bis 250°C angeschlossen ist.

8. Vorrichtung nach Anspruch 1 oder einem der weiteren Ansprüche, **dadurch gekennzeichnet, dass** das Mittel zur Rektifikation eine Rektifikationskolonne ist, insbesondere mit einem Behälter für flüssige Phase mit einem Siedebereich bis 250°C und einem Behälter für flüssige Phase mit einem Siedebereich über 250°C.

9. Vorrichtung nach Anspruch 8, **dadurch gekennzeichnet, dass** die Rektifikationskolonne einen Ausgang für flüssige Phase mit einem Siedebereich bis 250°C und einen Ausgang für flüssige Phase mit einem Siedebereich über 250°C aufweist, und dass der Ausgang für die flüssige Phase mit einem Siedebereich über 250°C mittels Rohrleitungen insbesondere mit dem Ofen, dem Dampfkessel und vorzugsweise dem Thermolyse-Ofen verbunden ist.

10. Vorrichtung nach Anspruch 4 oder einem der weiteren Ansprüche, **dadurch gekennzeichnet, dass** das Mittel zur kontinuierlichen Abführung von Wärmeenergie in Form eines Radiators mit einem Ventilator ausgeführt ist.

11. Vorrichtung nach Anspruch 1 oder einem der weiteren Ansprüche, **dadurch gekennzeichnet, dass** das Mittel zur insbesondere hermetischen Abdichtung der Schleusenkammer und des Thermolyse-Ofens vorzugsweise eine Tür ist, und dass das Mittel zur insbesondere hermetischen Abdichtung der Kühlkammer vorzugsweise in Form von Schieberverschlüssen ausgeführt ist, insbesondere als Flachschieberverschlüsse.

12. Vorrichtung für die Verarbeitung organischer Überreste, wobei die Vorrichtung einen auf einem Fahrgestellrahmen aufmontierten Dampfkessel mit einem Ofen und eine vor dem Ofen eingestellte Förderanlage aufweist, **dadurch gekennzeichnet, dass** die Vorrichtung zusätzlich eine Schleusenkammer, einen Thermolyse-Ofen, eine Kühlkammer und eine Einrichtung zur Schleusenkammerabdichtung, Thermolyse-Ofenabdichtung und Kühlkammerabdichtung aufweist, wobei die Förderanlage durch die Schleusenkammer durchläuft, wobei der Thermolyse-Ofen ausgerüstet ist mit einem Kondensator der gasförmigen Phase, einem Kondensatabscheider für Wasser und flüssige Anteile sowie einer Rektifikationseinrichtung der flüssigen Anteile, wobei der Kondensator eine Einrichtung für die unaufhörliche Wärmeenergieentziehung in die Umwelt enthält, wobei ein Kondensatoreingang mit einer Rohrleitung an einen oberen Teil des ThermolyseOfens angeschlossen ist, wobei der Ausgang der flüssigen Phase mit einer Rohrleitung an den Abscheider angeschlossen ist, wobei der Ausgang der gasförmigen Phase an den Dampfkessel angeschlossen ist, wobei die Kühlkammer einen Wasserzerstäuber enthält und einen Filter mit dem Behälter, welcher mit den Rohrleitungen an den Wasserausgang aus dem Abscheider und an den Wassereingang in dem Wasserzerstäuber angeschlossen ist, und wobei der Filter an den Wassereingang in den Dampfkessel angeschlossen ist.

13. Vorrichtung nach Anspruch 12, **dadurch gekennzeichnet, dass** die Rektifikationseinrichtung als Rektifikationskolonne angefertigt ist, welche einen Behälter für flüssige Phase mit einem Siedebereich bis 250°C und einen Behälter für flüssige Phase mit einem Siedebereich über 250°C aufweist, wobei der Behälter für die flüssige Phase mit dem Siedebereich bis 250°C mit der Rohrleitung an eine Diesel-Kraftstation angeschlossen ist, und wobei der Behälter für die flüssige Phase mit dem Siedebereich über 250°C mit den Rohrleitungen an den Dampfkessel und an den Ofen angeschlossen ist.

Fig. 1

16

**IN DER BESCHREIBUNG AUFGEFÜHRTE DOKUMENTE**

*Diese Liste der vom Anmelder aufgeführten Dokumente wurde ausschließlich zur Information des Lesers aufgenommen und ist nicht Bestandteil des europäischen Patentdokumentes. Sie wurde mit größter Sorgfalt zusammengestellt; das EPA übernimmt jedoch keinerlei Haftung für etwaige Fehler oder Auslassungen.*

**In der Beschreibung aufgeführte Patentdokumente**

- FR 2279836
- RU 2076501
- RU 12890
- RU 1783038